Europäisches Patentamt

European Patent Office

Office européen des brevets

(11) Publication number: **0 067 236**
**B1**

# EUROPEAN PATENT SPECIFICATION

(45) Date of publication of patent specification: **28.06.89**

(51) Int. Cl.⁴: **G 06 K 9/36**, G 06 K 9/34

(21) Application number: **82900151.0**

(22) Date of filing: **28.12.81**

(86) International application number:
**PCT/JP81/00424**

(87) International publication number:
**WO 82/02268 08.07.82 Gazette 82/17**

(54) **CHARACTER AND FIGURE ISOLATING AND EXTRACTING SYSTEM.**

(30) Priority: **29.12.80 JP 187607/80**
**29.12.80 JP 187608/80**

(43) Date of publication of application:
**22.12.82 Bulletin 82/51**

(45) Publication of the grant of the patent:
**28.06.89 Bulletin 89/26**

(84) Designated Contracting States:
**DE FR GB**

(56) References cited:

**COMPUTER IN BIOLOGY AND MEDECINE, vol.
2, no. 1, February 1972, pages 5-14, Pergamon
Press, Oxford, GB; E.A. PATRICK et al.:
"Computer controlled picture scanning with
application to labeled biological cells"**

(73) Proprietor: **FUJITSU LIMITED**
**1015, Kamikodanaka Nakahara-ku
Kawasaki-shi Kanagawa 211 (JP)**

(72) Inventor: **INOUE, Akira
878, Shimonoge, Takatsu-ku Kawasaki-shi
Kanagawa 213 (JP)**
Inventor: **YOSHIDA, Masumi
273-4-307, Hisasue Takatsu-ku, Kawasaki-shi
Kanagawa 211 (JP)**

(74) Representative: **Fane, Christopher Robin King
et al
HASELTINE LAKE & CO. Hazlitt House 28
Southampton Buildings Chancery Lane
London, WC2A 1AT (GB)**

## Description

The present invention relates to an apparatus for extracting characters and figures.

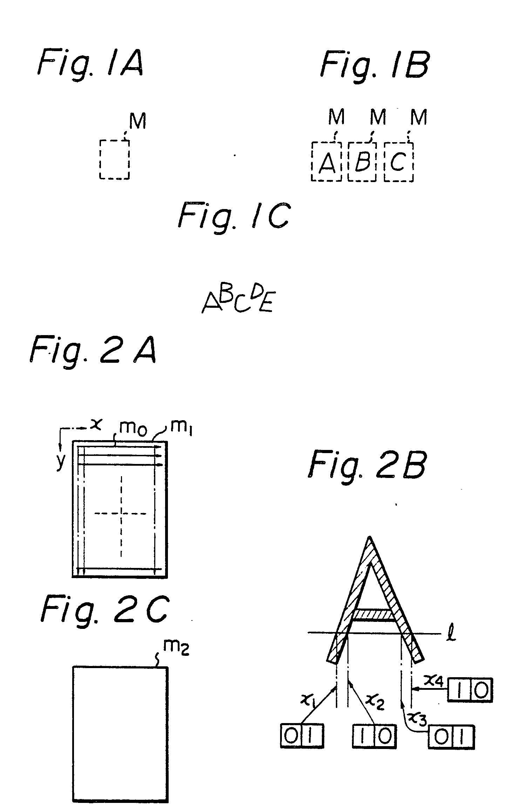

When characters freely written by hand are to be recognized by a character reader, the characters are separated into individual characters, extracted in a first stage, and are then discriminated. A known system for separating and extracting the characters consists of using a rectangular mask M which is shown in Fig. 1A, scanning a train of characters as shown in Fig. 1B to store the scanned data in a memory, and extracting the individual characters based upon the stored data. When the characters are spaced apart from each other and have a predetermined size as shown in Fig. 1B, they can be separated and extracted by using a mask having a predetermined shape such as the mask M which covers a single character.

However, when a plurality of characters are described (written) close to each other, as shown in Fig. 1C, the scanning method using a mask which covers a single character as shown in Fig. 1A is no longer capable of correctly separating the individual characters since two neighboring characters may often exist under the mask. In such a case, therefore, the character reader cannot correctly recognize the characters.

Another conventional system for separating and extracting the characters consists of tracing the edge of character data or figure data without using a mask, obtaining a separation frame consisting of a rectangular region that circumscribes the traced region relying upon the coordinates of points at the circumference of the character or figure, and producing the data of the region surrounded by the separation frame as the data of the separated character [Twenty-third Academy of Data Processing (second semester, 1981), national convention, 6C-4 by Hirokatsu Terashima and others].

Even with this system, however, the separation frame may include, in addition to a given character, portions of other neighboring characters when a plurality of characters are described (written) close to each other as shown in Fig. 1C, presenting such a disadvantage that an increased period of time is required for tracing the edge.

In an article entitled "Computer Controlled Picture Scanning with Application to Labeled Biological Cells" by E. A. Patrick et al published in Computers in Biology and Medicine, vol. 2, No. 1, February 1972, pages 5—14, Pergamon Press, Oxford, GB a cell image isolation system is described which is based on the combination of boundary features determined by scanning in two directions but, as is illustrated in Fig. 2 of this article, this known system is not capable of isolating images where the adjacent image is located in the dead zone of both scans.

Accordingly, it is desirable to provide a system for separating and extracting characters, which is capable of correctly separating the characters even when they have been described (written) close to each other.

According to the present invention, there is provided an apparatus for extracting characters and figures, comprising:

an input means for photoelectrically converting data on an original into picture data;

a first data-storing means for storing the picture data;

a first feature extracting means which scans the picture data stored in said data-storing means in a first direction to extract a first two-dimensional region between pairs of data-changing points;

a second feature extracting means which scans the picture data stored in the data-storing means in a second direction crossing the first direction to extract a second two-dimensional region between pairs of data-changing points;

a second data-storing means for storing intermediate regions where the first region and the second regions do not overlap;

a middle point extracting means for finding a middle point of at least one scanning line in each of the intermediate regions; and

a separation line setting means for obtaining separation lines for separating the picture by utilizing the middle points.

An embodiment of the present invention may provide an apparatus for separating and extracting characters, which is capable of separating into individual characters a plurality of characters even having been written close to each other on a handwritten original or drawing to such an extent that they cannot be separated into individual characters by the use of a mask of a predetermined shape.

In one embodiment of the present invention, the second data-storing means is equipped with a labeling means for attaching a label to each of the intermediate regions, and a label arranging means for sequentially arranging the labels.

Preferably, the neutral-point extracting means is provided with a memory means for storing the data of locus of middle points for each labeled intermediate region.

More preferably, the separation line setting means is provided with a boundary line associating means which draws a first horizontal line in a first direction between loci of middle points in two given intermediate regions, and employs the first horizontal line as one of the separation lines when there is no picture data on the first horizontal line.

Further preferably, the separation line setting means is provided with a horizontal line generating means which generates a second horizontal line which passes through a middle point remote from the picture data by a predetermined distance in each of the labeled intermediate regions, and a boundary line extracting means which draws a vertical line that serves as a boundary line when there is no picture data in a region where the second horizontal lines overlap as viewed from the second direction.

In another embodiment of the invention, the middle point extracting means is provided with a third feature extracting means which finds a middle point in each of the intermediate regions, draws a first vertical line in the second direction from the middle point, and draws a horizontal line in the first direction from a point at which the first vertical line is brought into contact with the picture data, and a drawing means which draws a second vertical line when there is no picture data in a region between two given horizontal lines which overlap as viewed from the second direction. In this case, preferably, the separation line setting means is provided with a boundary line extracting means which extracts the boundary line utilizing the first vertical lines, horizontal lines, and the second vertical lines.

Reference will now be made, by way of example, to the accompanying drawings, in which:

Fig. 1A is a diagram of a mask for reading characters;

Fig. 1B is a diagram showing a plurality of characters that can be separated by the mask;

Fig. 1C is a diagram showing a plurality of characters that cannot be separated by the mask;

Figs. 2 to 14 are diagrams illustrating the principle of a system for separating and extracting characters according to a first embodiment of the present invention, wherein:

Fig. 2A is a diagram showing a memory storing the picture data, and the state of scanning the memory;

Fig. 2B is a diagram which illustrates the steps for finding points at which the scanning data changes;

Fig. 2C is a diagram of an operation memory;

Fig. 3 is a diagram showing the state in which changing points in the scanning line are connected in the directions x and y;

Fig. 4 is a diagram showing the state of data on the operation memory, in which the regions where the lines in the direction x intersect the lines in the direction y, have a data "0", and the other regions have a data "1";

Fig. 5 is a diagram showing the state in which labels are attached to the regions of the data "1" of Fig. 4;

Fig. 6A is a diagram of a mask which consists of 3×2 dots;

Fig. 6B is a diagram showing the scanning state on the operation memory;

Fig. 7A is a diagram showing a recessed figure;

Fig. 7B is a diagram of a mask consisting of 3×3 dots;

Fig. 8A is a diagram for illustrating a middle point between a pair of changing points;

Fig. 8B is a table showing the contents of memory which stores a set of middle points;

Fig. 9 is a diagram showing loci of middle points in each of the labeled regions;

Fig. 10A is a diagram showing the state in which middle points are connected by lines, the middle points overlapping as viewed from the direction x between the loci of middle points of two labeled regions;

Fig. 10B is a diagram showing a horizontal boundary line that does not intersect the character among the lines of the overlapping middle points;

Fig. 10C shows tables of the state in which the component labels are attached to middle points that are connected by a line in Fig. 10;

Fig. 11A is a diagram showing positions that are separated by a predetermined distance ε from the positions at which loci of middle points come into contact with black points;

Fig. 11B and 11C are tables showing loci of middle points used for finding the distance ε;

Fig. 12A is a table showing middle points separated from the black points by a distance ε, and starting points and ending points of horizontal lines that pass through the middle points;

Fig. 12B is a diagram showing an overlapped portion as viewed from the direction y concerning a line that passes through a middle point of Fig. 12A in the two labeled regions;

Fig. 13 is a diagram showing the state in which a vertical boundary line is drawn between the overlapped lines;

Fig. 14 is a diagram of boundary line made up of loci of middle points, horizontal lines and vertical lines, after unnecessary loci of middle points have been removed;

Fig. 15 is a block diagram of an apparatus for separating and extracting characters according to the first embodiment of the present invention;

Figs. 16 to 20 are diagrams which illustrate the principle of the system for separating and extracting characters according to a second embodiment of the present invention, in which:

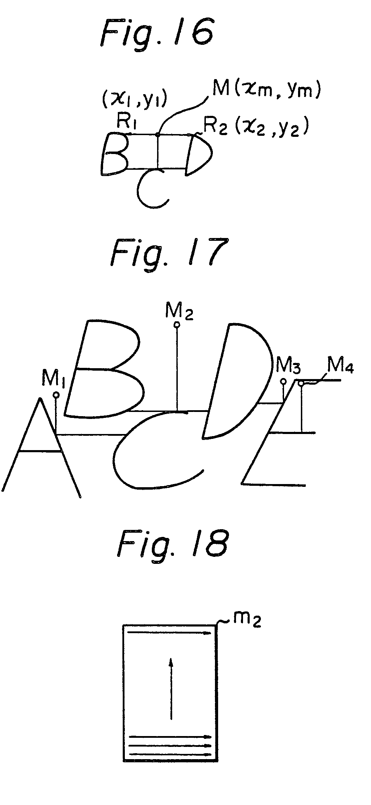

Fig. 16 is a diagram showing the state where a vertical line drawn from a middle point between the changing points comes into contact with the character data;

Fig. 17 is a diagram showing the state where the vertical lines obtained by the method of Fig. 16, and horizontal lines are both in contact with the character data, the horizontal lines being drawn from points at which the vertical lines are in contact with the character data;

Fig. 18 is a diagram showing the state in which the operation memory is scanned in the horizontal direction from the lower side;

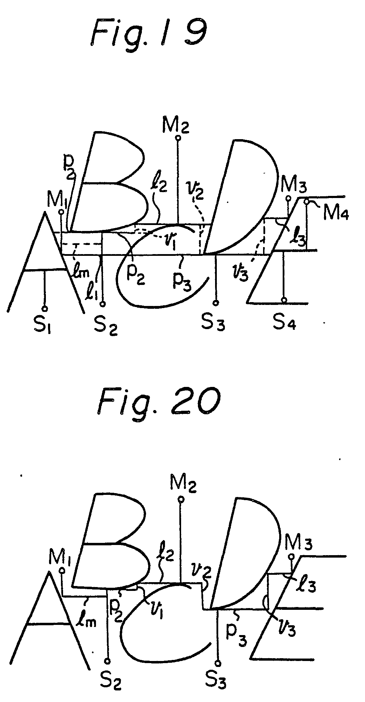

Fig. 19 is a diagram showing the state in which a vertical line from a middle point of the lower side and a horizontal line, a horizontal line between the two horizontal lines, and a vertical line when the two horizontal lines overlap, are added to the state of Fig. 17;

Fig. 20 is a diagram illustrating a boundary line obtained by removing unnecessary horizontal lines and vertical lines from Fig. 19; and

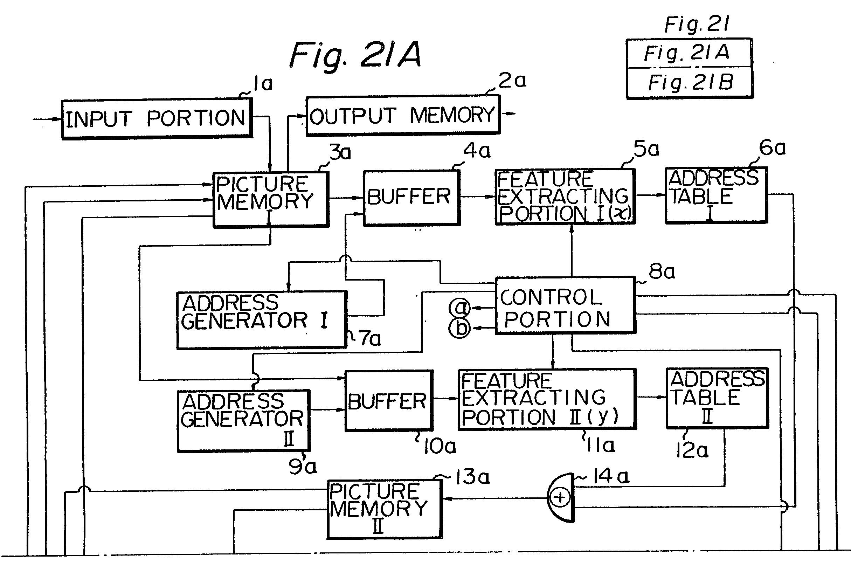

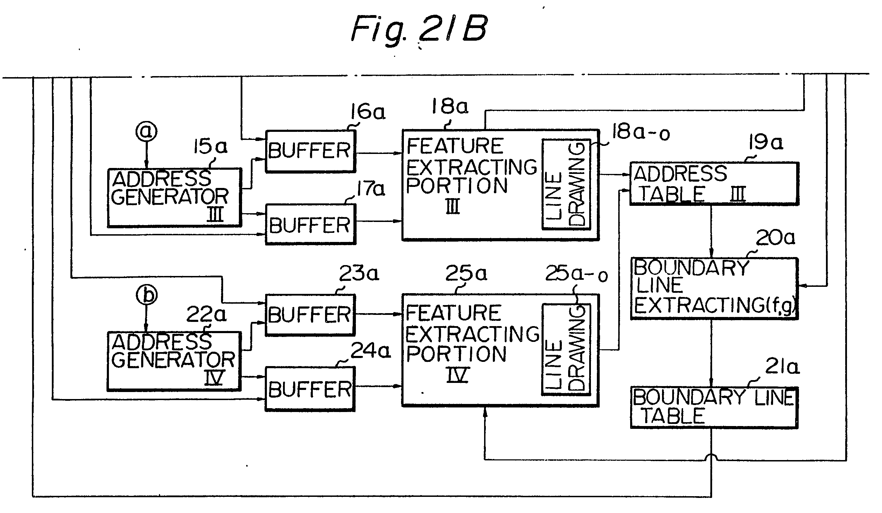

Fig. 21 is a block diagram of an apparatus for separating and extracting characters according to a second embodiment of the present invention.

Prior to illustrating the first embodiment of the present invention, the principle of a system for separating and extracting characters according to the first embodiment of the present invention will be described below in conjunction with Figs. 2 to 14.

(a) First, characters and figures written by hand on the original or on the drawing are read and stored as picture data $m_0$ in a memory $m_1$ of Fig.

2A. In the picture data $m_0$, black points where characters or figures are described have a data "1", and portions where no character or figure is described have a data "0". The picture data $m_0$ on the memory $m_1$ is then scanned in the direction x as indicated by solid lines in Fig. 2A.

The memory $m_0$ is scanned in order to find changing points, i.e., to find points where the data changes from "0" to "1", and from "1" to "0" as shown in Fig. 2B. Referring to Fig. 2B, for instance, when the memory $m_0$ is scanned along a line I, the data changes from "0" to "1" at a point $x_1$, changes from "1" to "0" at a point $x_2$, changes from "0" to "1" at a point $x_3$, and changes from "1" to "0" at a point $x_4$. These points $x_1$ to $x_4$ therefore are referred to as changing points. A pair of changing points $P_1$ ("1" to "0") and $P_2$ ("0" to "1") are detected from the above-mentioned changing points, and the data "1" is imparted to the whole region between the changing points $P_1$ and $P_2$, and stored in a separate operation memory $m_2$. In Fig. 2B, for instance, the data "1" is imparted to the whole region between the point $x_2$ and the point $x_3$ on the line.

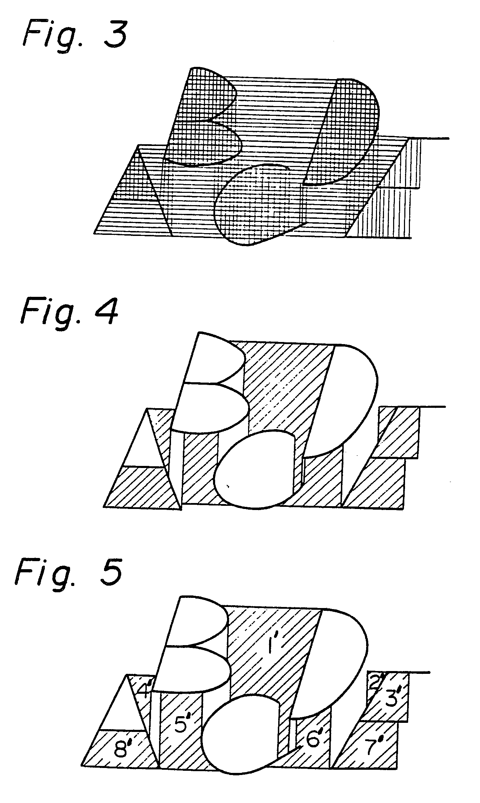

(b) Next, the picture data $m_0$ on the memory $m_1$ is scanned in the direction y as indicated by dot-dash chain lines in Fig. 2A, to detect a pair of changing points $Q_1$ ("1" to "0") and $Q_2$ ("0" to "1") in the direction y. The region on the operation memory $m_2$ between the changing points $Q_1$ and $Q_2$ is inverted to "1" if it has the data "0", and is inverted to "0" if it has the data "1". By renewing the contents of the operation memory $m_2$, the regions of double lines assume the data "0" and the regions of single lines assume the data "1" as shown in Fig. 3. The data are stored in the memory $m_2$ as shown in Fig. 4. However, since the data is "1" on the memory $m_1$ corresponding to a portion where the character or figure is described, the data "0" remains on the operation memory $m_2$. Thus, the memory $m_2$ stores such data that hatched portions (excluding characters) of Fig. 4 all assume the value "1".

(c) Labels are attached by the clustering technique to the regions of the data "1" of Fig. 4; i.e., labels 1' to 8' are attached to each of the regions (Fig. 5).

The clustering and labeling will be described below in detail.

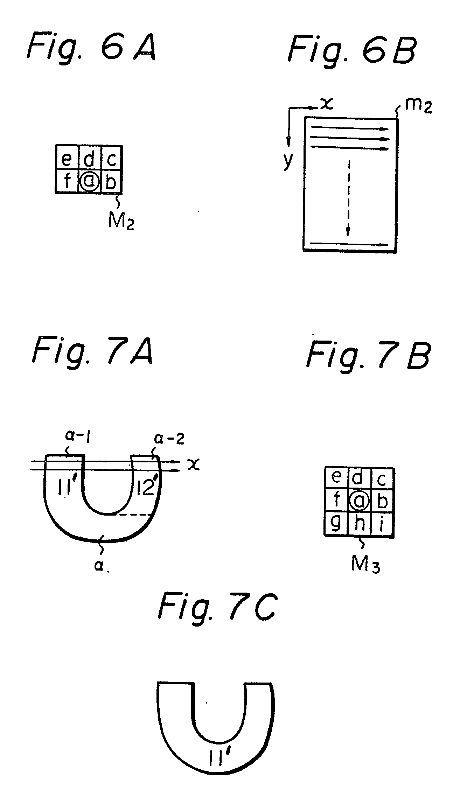

(c-1) The operation memory $m_2$ shown in Fig. 6B is scanned from the left to the right in the direction x by using a mask $M_2$ which consists of 3×2 dots including six elements a to f as shown in Fig. 6A. When the data of the dot on the memory $m_2$ corresponding to the element a of the mask $M_2$ is "1" at a given position on the memory $m_2$, a label is attached to this dot. In this case, it is checked whether labels are attached to the dots on the memory $m_2$ corresponding to the elements c to f which surround the element a. When the dots corresponding to the elements c to f have not been labeled, a new label, for example, label 1' is attached to the dot which corresponds to the element a. When any one of the dots corresponding to the elements c to f have been labeled, the same label is attached to the dot which corresponds to the element a. When two or more labels are attached to the dots corresponding to the elements c to f, the younger label takes precedence. Then, as the mask $M_2$ is moved by one dot to the right in the direction x, the dot which corresponds to the element a before the mask $M_2$ is moved comes to the position which corresponds to the element f. Here, since the label 1' has already been attached to the dot of the new element f, the label 1' is attached to the dot of the new element a. In this way, the memory $m_2$ is wholly scanned using the mask $M_2$ to attach the labels 1' to 8' as shown in Fig. 5.

(c-2) In this case, however, the problem as mentioned below arises. For instance, when the same region of a recessed shape shown in Fig. 7A is scanned, different labels will be attached. That is, the region α of a recessed shape shown in Fig. 7A will be scanned in a way that the region $α_1$ is scanned first, and the region $α_2$ is then scanned maintaining an interval from the region $α_1$. Whether the region $α_1$ and the region $α_2$ pertain to the same region or not, they are not discriminated the first time. When the scanning is effected in the direction x, therefore, a label 11' is attached to the region $α_1$, and a label 12' is attached to the region $α_2$.

In order to give the same label to the regions $α_1$ and $α_2$, the scanning is effected using the mask $M_2$, and the scanning is effected again using a mask $M_3$ of 3×3 shown in Fig. 7B. When different labels such as labels 11' and 12' have been attached to the dots corresponding to the elements b to f which surround the element a, the label having a larger number is brought into agreement with the label having a smaller number. This makes it possible to correct the portion in the vicinity of a dotted line of Fig. 7A to the label 11'. This operation is repeated until there is no change in the label. Consequently, the same label is attached to the same region as shown in Fig. 7C.

(c-3) Thus, if the same label is attached to the same region, some labels are eliminated through the operation of bringing the labels into agreement. In most cases, therefore, the labels are not attached sequentially. That is, the labels, in many cases, are attached in a manner of 1', 4', 9', 12', - - - - -. Accordingly, it becomes necessary to correct the labels into sequential numbers and to align the labels. The above-mentioned labels 1', 4', 9', 12', - - - - - must be corrected and arranged like 1', 2', 3', 4', - - - - -.

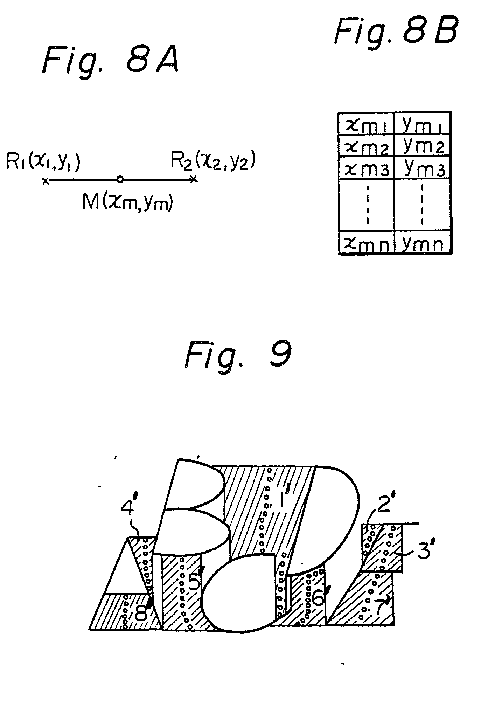

(d) The thus labeled picture of Fig. 5 is scanned on the memory $m_2$ in the direction x. A pair of changing points $R_1$ ("0" to "1") and $R_2$ ("1" to "0") are detected for each of the regions of the labels 1' to 8', and a locus of middle points M of the pairs of changing points $R_1$, $R_2$ is stored. Here, if the coordinate of $R_1$ is given by $(x_1, y_1)$, the coordinate of $R_2$ by $(x_2, y_2)$, and the coordinate of the middle point M by $(xm, ym)$, then $xm=(x_1+x_2)/2$ and $ym=y_1=y_2$. Positions of the

thus found middle points $M_1$ $(xm_1, ym_1)$, $M_2$ $(xm_2, ym_2)$, ----- are stored in a table shown, for instance, in Fig. 8B, and a locus of the middle points is stored. The locus of the middle points is found for the regions of all labels. This makes it possible to obtain loci of middle points for the regions of all labels as shown in Fig. 9.

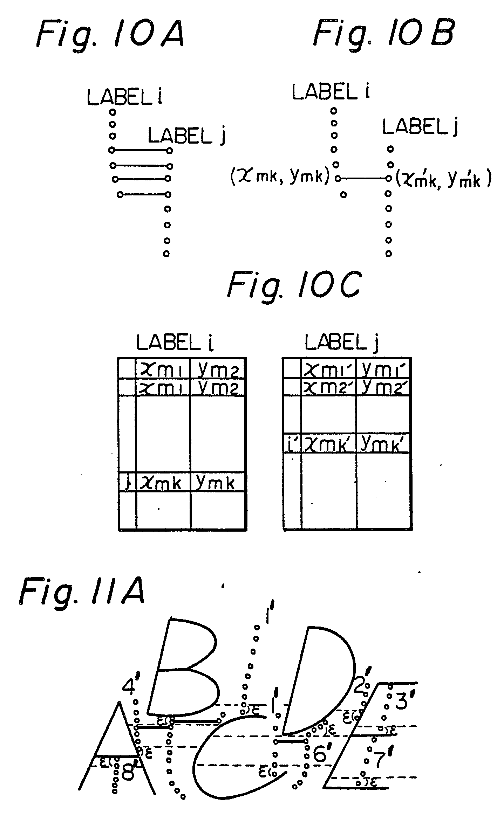

(e) With regard to the regions of the thus found two given labels, i.e., with regard to the loci of middle points of the region of the label $i$ and the region of the label $j$, a straight line in the direction x is drawn, i.e., a horizontal line is drawn between the two points that overlap as viewed in the direction x as shown in Fig. 10A. Then, the original picture data $m_0$ in the memory $m_1$ corresponding to the horizontal lines is examined. The horizontal line is eliminated when there is at least one black point, i.e., when there is at least one character data "1" in a portion corresponding to the horizontal line. When there are one or more horizontal lines with the data "0" on the memory $m_1$, only one horizontal line is left and the others are eliminated. Fig. 10B illustrates the state where a horizontal line connecting a middle point $(x_{mk}, y_{mk})$ in the region of the label $i$ to a middle point $(x_{mk}', y_{mk}')$ in the region of the label $j$ is left. This horizontal line is employed as a boundary line for separating characters. Referring to a table of middle point of the region of label $i$ and a table of middle point of the region of label $j$, the opponent labels are attached to the two points connected by the horizontal line, as shown in Fig. 10C. That is, the label $j$ is attached to the middle point $(x_{mk}, y_{mk})$ in the region of the label $i$, and the label $i$ is attached to the middle point $(x_{mk}', y_{nk}')$ in the region of the label $j$. Once the opponent labels are attached, the processing is finished between the regions of the two labels. This processing is effected between the regions of all labels.

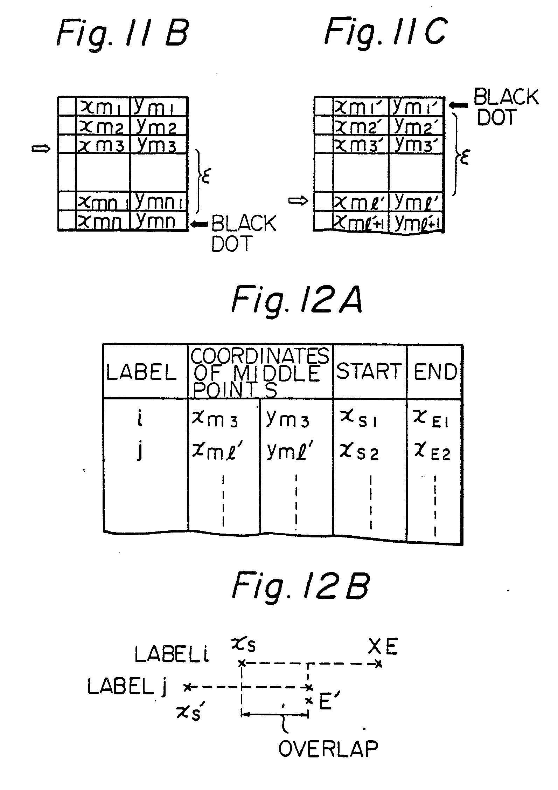

(f) Next, a distance is found which is located in front by a predetermined distance $\varepsilon$ from the position at which the locus of middle points M found in (d) above comes into contact with the black point. The optimum distance $\varepsilon$ is suitably determined by simulation. Therefore, it is possible to find a position which is separated by the distance $\varepsilon$ from the position at which the locus of middle points M comes into contact with the black point as shown in Fig. 11A, relying upon tables which are shown in Figs. 11B and 11C. That is, Fig. 11B shows the case when the locus of middle points comes into contact on the lower side with the black point as in the region of label 1', and Fig. 11C shows the case when the locus of middle points comes into contact on the upper side with the black point as in the region of label 5'.

(g) A horizontal line is thus drawn in the direction x starting from a middle point located in front by the distance $\varepsilon$. When the horizontal line comes into contact with the black point, the left end of the horizontal line is regarded as a starting point $x_S$ of the horizontal line, and the right end is regarded as an ending point $x_E$. These points are stored in a table as shown in Fig. 12A.

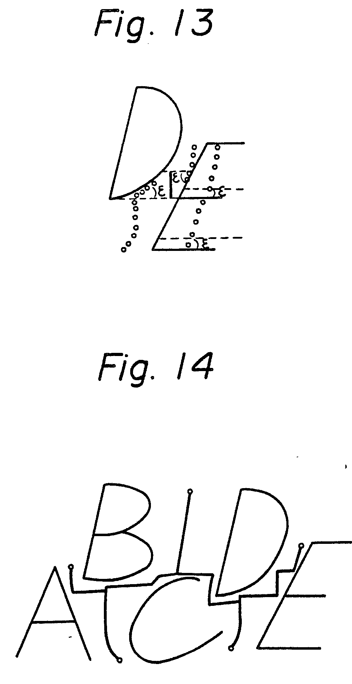

(h) A vertical line is drawn to run through a portion where the x coordinate of a horizontal line passing through a middle point of a region of one label overlaps the x coordinate of a horizontal line passing through a middle point of a region of another label, in order to examine the original picture data $m_0$ stored in a memory $m_1$ that correspond to the vertical line. When the vertical line does not come into contact with the black point, and when the regions of the two labels are not furnished with opponent labels as shown in Fig. 10C, the vertical line is employed as a boundary line. Thus, the vertical line shown in Fig. 13 serves as a boundary line for separating characters.

The character data can be completely separated into individual data as shown in Fig. 14 by the boundary line which consists of horizontal boundary lines, vertical boundary lines, and loci of middle points excluding unnecessary portions, that are obtained as mentioned in the foregoing. Therefore, the individual character data can be obtained if the original picture data stored in the memory $m_1$ is extracted using the boundary line data.

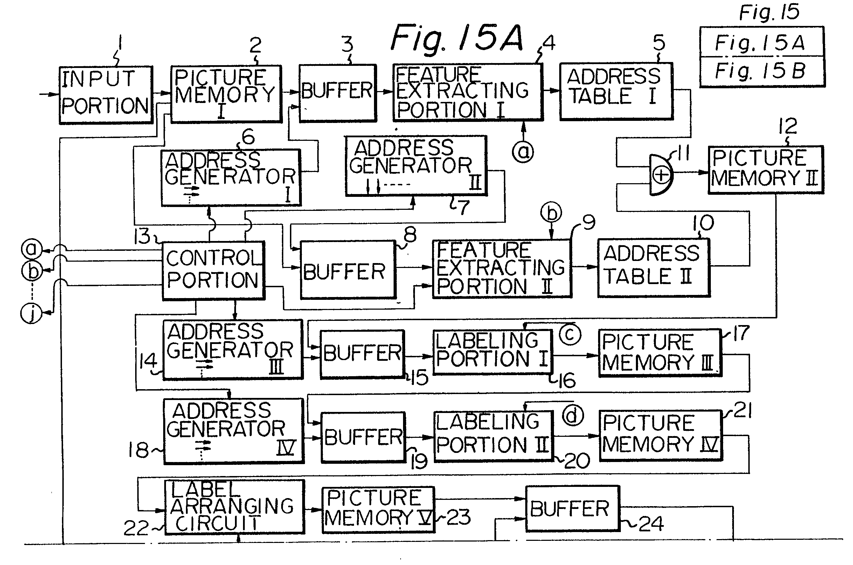

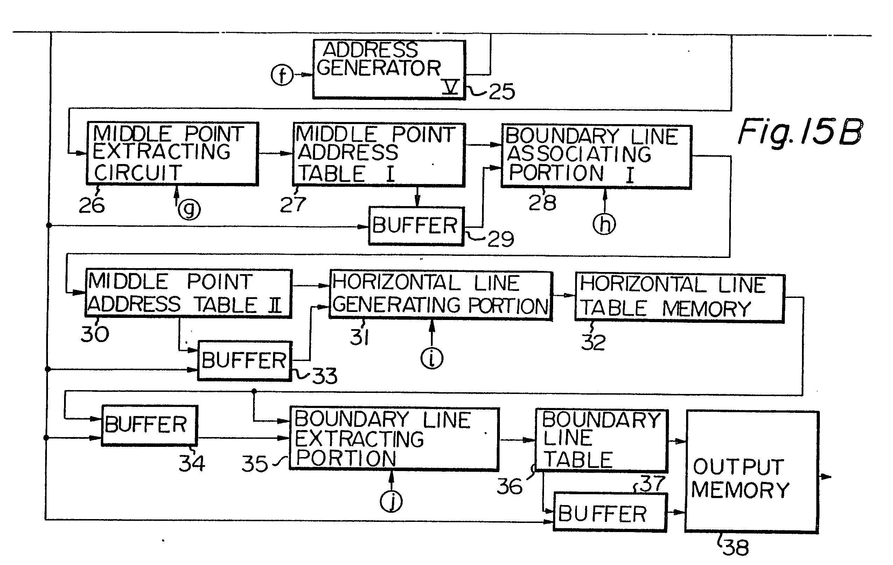

A first embodiment of the present invention will be described below with reference to Fig. 15, in which reference numeral 1 denotes an input portion, 2 a first picture memory, 3 a buffer, 4 a first feature extracting portion, 5 a first address table, 6 a first address generating unit, 7 a second address generator, 8 a buffer, 9 a second feature extracting portion, 10 a second address table, 11 an exclusive OR circuit, 12 a second picture memory, 13 a control portion, 14 a third address generator, 15 a buffer, 16 a first labeling portion, 17 a third picture memory, 18 a fourth address generator, 19 a buffer, 20 a second labeling portion, 21 a fourth picture memory, 22 a label arranging circuit, 23 a fifth picture memory, 24 a buffer, 25 a fifth address generator, 26 a middle point extracting circuit, 27 a first middle point address table, 28 a first boundary line associating portion, 29 a buffer, 30 a second middle point address table, 31 a horizontal line generating portion, 32 a horizontal line table memory, 33 and 34 buffers, 35 a boundary line extracting portion, 36 a boundary line table, 37 a buffer, and 38 an output memory.

The input portion 1 photoelectrically converts a handwritten original or the like to produce electric signals. The first picture memory 2 stores the picture data sent from the input portion 1. The buffer 3 works as an operation buffer memory to carry out the processing as described in (a) above, and is set upon receipt of a portion of the picture data stored in the first picture memory 2.

The first feature extracting portion 4 finds a pair of changing points $P_1$ and $P_2$ as mentioned in (a) above from the picture data stored in the buffer (3), and reads the region between $P_1$ and $P_2$ as "1". The first address table 5 stores the address of the region "1" between the changing points $P_1$ and $P_2$.

The first address generator 6 produces addresses to scan the picture data stored in the buffer 3 in the direction x as described in (a) above.

The second address generator 7 generates addresses to scan the picture data in the direction y as described in (b) above, the picture data being sent from the first picture memory 2 and stored in the buffer 8.

The second feature extracting portion 9 detects the pair of changing points $Q_1$ and $Q_2$ as mentioned in (b) above from the picture data stored in the buffer 8, and reads the region between $Q_1$ and $Q_2$ as "1". The second address table 10 stores the address of the region "1" between the changing points $Q_1$ and $Q_2$.

The second picture memory 12 stores the picture data of Fig. 4 that is obtained through the procedures of (a) and (b) above.

The control portion 13 processes the picture data input to the first picture memory according to the procedures of (a) to (i) above, so that the individual character regions can be prepared and extracted. The control portion 13 therefore controls the first address generator 6 which scans the buffer 3, and controls the first feature extracting portion 4.

The third address generator 14 generates addresses such that the picture data stored in the buffer 15 are scanned as shown in Fig. 6B using a mask of Fig. 6A, and such that the processing is effected as described in (c-1) above. The buffer 15 stores the picture data which is shown in Fig. 4, and transmitted from the second picture memory 12.

The first labeling portion 16 performs the processing mentioned in (c-1) to attach labels to the regions, relying upon the data obtained by scanning the picture data which is shown in Fig. 4 and stored in the buffer 15 using the mask of Fig. 6A. The labeled picture data is then stored in the third picture memory 17.

The fourth address generator 18 generates addresses such that the buffer 19 is scanned by the mask $M_3$ of Fig. 7B as described in (c-2) above. The buffer 19 stores the picture data transmitted from the third picture memory 17.

The second labeling portion 20 performs the processing as described in (c-2) above relying upon the data obtained by scanning the buffer 19 using the mask $M_3$.

The fourth picture memory 21 stores the picture data in which the same label is attached to the same region, which is treated by the second labeling portion 20.

The label arranging circuit sequentially arranges the labels as described in (c-3) above, and the labeled picture data shown in Fig. 5 is stored in the fifth picture memory 23. The picture data stored in the fifth picture memory 23 is then sent to the buffer 24. The fifth address generator unit 25 generates addresses so that the picture data stored in the buffer 24 and shown in Fig. 5 is scanned in the direction x.

The middle point extracting circuit 26 performs the processing as shown in (d) above to obtain middle point addresses which will be stored in the first middle point address table 27 under the condition shown in Fig. 8B.

The boundary line associating portion 28 performs the processing as mentioned in (e) above. The original picture data necessary for this purpose is sent from the first picture memory 2 to the buffer 29. The resulting labeled table shown in Fig. 10C is then set to the second middle point address table 30.

The horizontal line generating portion 31 executes the processings of (f) and (g) above. The original picture data necessary for this purpose is sent from the first picture memory 2 to the buffer 33. The resulting table shown in Fig. 12A is stored in the horizontal line table memory 32.

The buffer 34 which stores the original picture data sent from the first picture memory 2, is used to detect whether a black point exists in a region where horizontal lines overlap, that is stored in the horizontal line table memory 32.

The boundary line extracting portion 35 executes the processings of (h) and (i) above, and draws vertical lines as shown in Fig. 13 in order to prepare a boundary line for each character as shown in Fig. 14. The coordinate data of the individual boundary lines are stored in the boundary line table 36.

The buffer stores the original picture data sent from the first picture memory 2. The original picture data is extracted relying upon the coordinate data that represents the boundary line input to the boundary line table 36, and is outputted to the output memory 38 as picture data for each character.

Operation of the apparatus of Fig. 15 will be described below briefly.

(1) First, the picture data of a handwritten original or the like is converted through the input portion 1 into electric signals to form picture data of "1" and "0" which will be stored in the first picture memory 2. The picture data is further sent to the buffers 3 and 8, and is stored therein.

(2) After the picture data is stored in the buffers 3 and 8, the control portion 13 sends control signals to the first address generator 6 and to the second address generator 7, so that the first address generator 6 will produce addresses to scan the buffer 3 in the direction x and the second address generator 7 will produce addresses to scan the buffer 3 in the direction y. The first feature extracting portion 4 then detects a pair of changing points $P_1$ and $P_2$ as described in (a) above, and sets the region between the pair of changing points $P_1$ and $P_2$ to be "1". Address of the region "1" is stored in the first address table 5. The second feature extracting portion 9, on the other hand, detects a pair of changing points $Q_1$ and $Q_2$ as mentioned in (b) above, and sets the region between the pair of changing points $Q_1$ and $Q_2$ tm be "1". Address of the region "1" is stored in the second address table 10.

(3) After the region between the changing points $P_1$ and $P_2$, and the region between the changing points $Q_1$ and $Q_2$ are set to "1", the exclusive OR circuit 11 performs the exclusive OR operation of the region "1" stored in the first address table 5 and of the region "1" stored in the second address table 10. Thus, the picture data is obtained as shown in Fig. 4, and is stored in the second picture memory 12.

(4) The thus obtained picture data of Fig. 4 is transmitted from the second picture memory 12 to the buffer 15. The control portion 13 so controls the third address generator 14 that the buffer 15 is scanned in the direction x. Based upon the thus read data, the first labeling portion 16 performs the processing to read the data using mask $M_2$ of Fig. 6A as mentioned in (c-1) above. The labeled picture data is then stored in the third picture memory 17.

(5) Then, the picture data stored in the third picture memory 17 is sent to the buffer 19 and is stored therein. In this case, the control portion 13 so controls the fourth address generator 18 that the buffer 19 is scanned in the direction x. Relying upon the thus read data, the second labeling portion 20 executes the processing to read the data using mask $M_3$ of Fig. 7B as described in (c-2) above. Consequently, the same label is attached to the same region.

(6) The picture data produced by the second labeling portion 20 is stored in the fourth picture memory 21, and is subjected to the processing mentioned in (c-3) above by the label arranging circuit 22. After the labels are sequentially arranged as shown in Fig. 5, the picture data is stored in the fifth picture memory 23.

(7) The picture data which is stored in the fifth picture memory 23 and labeled as shown in Fig. 5, is then sent to the buffer 24. In this case, the control portion 13 sends control signals to the fifth address generator 25, so that the buffer 24 is scanned in the direction x. Relying upon the data which is produced, the middle point extracting circuit 26 performs the processing of (d) above. Thus, loci of middle points as shown in Fig. 9 are obtained with the loci of middle points of Fig. 8B being stored in the first middle point address table 27.

(8) The data of loci of middle points are transmitted to the first boundary line associating portion 28. The original picture data sent from the first picture memory is stored in the buffer 29, and the first boundary line associating portion 28 executes the processing of (e) above with reference to the original picture data. Consequently, the labeled table as shown in Fig. 10C is stored in the second middle point address table 30.

(9) The data set to the second middle point address table 30 is transmitted to the horizontal line generating portion 31 to execute the processings of (f) and (g) above. The original picture data necessary for this purpose is stored in the buffer 33, and the horizontal line generating portion 31 executes the processings of (f) and (g) above with reference to the original picture data stored in the buffer 33. The thus obtained data is stored in the horizontal line table memory 32 in the form as shown in Fig. 12A.

(10) The boundary line extracting portion 35 executes the processings of (h) and (i) above based upon the data transmitted from the horizontal line table memory 32 and the original picture data stored in the buffer 34. Thus, the vertical lines are drawn as shown in Fig. 13, and the boundary line for separating characters is prepared as shown in Fig. 14. Coordinate data of boundary lines indicated by thick lines in Fig. 14 is set to the boundary line table 36. The original picture data is transmitted from the first picture memory to the buffer 37. Relying upon the coordinate data of boundary lines, therefore, the original picture data can be extracted for each character, and stored in the output memory 38. Thus, the required character data is obtained from the output memory 38 for the individual characters. By supplying the character data to the character reader, therefore, the handwritten characters can be recognized.

According to the above-mentioned first embodiment of the present invention, the intermediate regions among the characters are labeled to obtain a boundary line for separating characters, and the middle points are found for all scanning lines in the direction x in the labeled regions. According to the second embodiment of the present invention, the intermediate regions need not necessarily be labeled in case the characters can be separated relatively simply, and the characters can be simply separated and extracted by finding the middle point for only one scanning line in the direction x in each of the intermediate regions.

The principle of the second embodiment of the present invention will be described below in conjunction with Figs. 16 to 20.

The processings of (a) and (b) mentioned in conjunction with Figs. 2 to 4 are also carried out in the second embodiment. In the second embodiment, however, the following processings $(c_a)$ to $(g_a)$ are carried out instead of the clustering processing.

$(c_a)$ The memory $m_2$ storing the data of Fig. 4 is scanned in the direction x to detect a pair of changing points $R_1$ ("0" to "1") and $R_2$ ("1" to "0") in the hatched region. The changing points can be detected relying upon the fact that the data "0" has continued in the scanning region before the hatched area, and that the data "1" has been maintained wider than the character in the hatched region.

$(d_a)$ Here, when the coordinate of the changing point $R_1$ is given by $(x_1, y_1)$ and the coordinate of the changing point $R_2$ by $(x_2, y_2)$ as shown in Fig. 16, a middle point M (xm, ym) at the center thereof is found. Namely, $xm=(x_1+x_2)/2$, $ym=y_1=y_2$. Thus, middle points $M_1$ to $M_4$ are obtained as shown in Fig. 17. Lines are drawn in the direction y starting from the middle points $M_1$ to $M_4$. When the straight line has come into contact with a point of character data where the data "1" exists continuously, a horizontal line is drawn again starting from the point of contact in the right and left directions until it comes into contact again with the point of character data. In Fig. 17, it is obvious that the horizontal line cannot be drawn from the middle point $M_4$.

($e_a$) Then, the memory $m_2$ is scanned in the direction x from the lower side as shown in Fig. 18. In Fig. 19, middle points $S_1$ to $S_4$ are found in the same manner as in ($d_a$) above, straight lines are drawn therefrom in the direction y, and horizontal lines are drawn when the vertical lines come into contact with the points of character data. In Fig. 19, horizontal lines cannot be drawn from the points $S_1$ to $S_4$.

($f_a$) When the vertical line from the middle point $M_1$ intersects two horizontal lines $p_2$, $l_1$, a horizontal line $l_m$ is drawn between the horizontal lines $p_2$ and $l_1$, as shown in Fig. 19. When the horizontal lines overlap in the direction x, vertical lines $v_1$, $v_2$, and $v_3$ are drawn in the overlapped regions.

($g_a$) By drawing the lines as mentioned above, the characters A, B, - - - - - E can be separated into single characters by the middle points $M_1$, $M_2$, $M_3$, $S_2$, $S_3$, horizontal lines $l_m$, $p_2$, $l_2$, $p_3$, $l_3$, and vertical lines $v_1$, $v_2$, $v_3$, - - - as shown in Fig. 20.

The second embodiment of the present invention will be described below in conjunction with Fig. 21, in which reference numeral 1a denotes an input portion, 2a an output memory, 3a a first picture memory, 4a a buffer, 5a a first feature extracting portion, 6a a first address table, 7a a first address generator, 8a a control portion, 9a a second address generator, 10a a buffer, 11a a second feature extracting portion, 12a a second address table, 13a a second picture memory, 14a an exclusive OR circuit, 15a a third address generator 16a and 17a buffers, 18a a third feature extracting portion, 19a a third address table, 20a a boundary line extracting portion (f, g), 21a a boundary line table, 22a a fourth address generator, 23a, 24a buffers, and 25a a fourth feature extracting portion.

The input portion 1a photoelectrically converts a handwritten original or the like to produce electric signals. The output memory 2a stores the data obtained from the handwritten original to produce individual character data that are divided as shown in Fig. 20.

The first picture memory 3a stores the picture data sent from the input portion 1a. The buffer 4a works as an operation buffer memory to carry out the processing as described in (a) above, and stores the picture data sent from the first picture memory 3a.

The first feature extracting portion 5a finds a pair of changing points $P_1$ and $P_2$ as mentioned in (a) above from the picture data stored in the buffer 4a, and reads the region between $P_1$ and $P_2$ as "1". The first address table 6a stores the address of the region "1" between the changing points $P_1$ and $P_2$.

The first address generator 7a produces addresses to scan the picture data stored in the buffer 4a in the direction x as described in (a) above.

The control portion 8a processes the picture data input to the first picture memory 3a according to the procedures of (a) to ($g_a$) above, so that

the individual character regions can be prepared. The control portion 8a therefore controls the first address generator 7a and the first feature extracting portion 5a.

The second address generator 9a generates addresses so that the picture data stored in the buffer 10a is scanned in the direction y as described in (b) above, and the buffer 10a works as an operation buffer memory which stores the picture data sent from the first picture memory 3a, and which executes the processing mentioned in (b) above.

The second feature extracting portion 11a detects the pair of changing points $Q_1$ and $Q_2$ as mentioned in (b) above from the picture data stored in the buffer 10a, and reads the region between $Q_1$ and $Q_2$ as "1". The second address table 12a stores the address of the region "1" between the changing points $Q_1$ and $Q_2$.

The second picture memory 13a stores the picture data of Fig. 4 that is obtained through the procedures of (a) and (b) above.

The third address generator 15a generates addresses such that the buffers 16a and 17a can be successively scanned in the direction from the upper side of the characters. The buffer 16a stores the picture data shown in Fig. 4 which has been stored in the second picture memory 13a, and the buffer 17a stores the picture data which has been set to the first picture memory 3a. These buffers 16a, 17a are scanned in the direction x from the upper side of the characters in order to execute the processings mentioned in ($c_a$) and ($d_a$) above, thereby to obtain middle points $M_1$ to $M_4$, vertical lines that stretch therefrom, and horizontal lines, as shown in Fig. 17.

The third feature extracting portion 18a executes the processings of ($c_a$) and ($d_a$) above based upon the picture data stored in the buffers 16a and 17a. That is, the buffer 16a storing the picture data of Fig. 4, and the buffer 17a storing the picture data transmitted from the first picture memory 3a, are successively scanned in the direction x from the upper side of the characters responsive to the address data generated by the third address generator 15a, and the output data are successively transmitted to the third feature extracting portion 18a. Changing points $R_1$ and $R_2$ in the hatched regions of Fig. 4 are detected relying upon the data produced by the buffer 16a. By successively scanning the buffer 16a in the direction x, the middle points $M_1$, $M_3$, and $M_4$ are obtained by the method described in ($c_a$) above. Here, since the character data are transmitted from the buffer 17a, positions of the characters can be discriminated unlike the case mentioned in ($c_a$) above. After the middle points $M_1$ to $M_4$ are obtained as mentioned above, a line drawing circuit 18a-0 in the third feature extracting portion 18a downwardly draws lines in the direction y starting from the middle points $M_1$ to $M_4$. When the lines come into contact with the characters (positions of the characters are determined by the character data transmitted from the buffer 17a), the lines are then drawn toward the right and left in the direction x starting from the points of contact. The lines are drawn until they come into contact with the characters. From the middle point $M_4$, therefore, only a vertical line in the direction y can be drawn.

The third address table 19a stores middle points $M_1$ to $M_4$, $S_1$ to $S_4$, coordinates at which the straight lines come into contact with the characters, and coordinates at which the lines intersect, that are obtained through the procedures of ($c_a$), ($d_a$), and ($e_a$) above.

The boundary line extracting portion (f, g) 20a executes the processings mentioned in ($f_a$) and ($g_a$) above based upon the data transmitted from the third address table 19a, to prepare a boundary among the characters as shown in Fig. 20. The boundary line table 21a stores the data of boundary positions among the characters, which prepared by the boundary line extracting portion (f, g) 20a.

The fourth address generator 22a generates addresses to scan the buffers 23a and 24a in the direction x from the lower side of the characters as mentioned in ($e_a$). The buffer 23a stores the picture data of Fig. 4 which has been stored in the second picture memory 13a, and the buffer 24a stores the picture data which has been stored in the first picture memory 3a. These buffers 23a, 24a are scanned in the direction x from the lower side of the characters to perform the processings mentioned in ($c_a$) above, in order to obtain middle points $S_1$ to $S_4$, vertical lines which start therefrom, and horizontal lines, as shown in Fig. 19.

The fourth feature extracting portion 25a executes the processing of ($e_a$) above based upon the picture data stored in the buffers 23a, 24a. That is, responsive to address data generated by the fourth address generator 22a, the buffer 23a to which the picture data of Fig. 4 has been set, and the buffer 24a in which has been stored the picture data transmitted from the first picture memory 3a, are successively scanned in the direction x from the lower side of the characters, and the output data are successively transmitted to the fourth feature extracting portion 25a. Relying upon the data transmitted from the buffer 23a, the fourth feature extracting portion 25a obtains the middle points $S_1$ to $S_4$, and a line drawing 25a-0 draws lines upwardly in the direction y starting from the middle points $S_1$ to $S_4$. When the lines come into contact with the characters (character positions are obtained from the character data transmitted from the buffer 24, as a matter of course), lines are then drawn toward the right and left in the direction x starting from the points of contact. These lines are drawn until they come into contact with the characters. Therefore, as shown in Fig. 19, the lines are not drawn in the direction x from the lines of the direction y drawn from the middle points $S_1$ to $S_4$, but a line $p_2$ is drawn from the line drawn from the middle point $S_2$, and a line $p_3$ is drawn from the line drawn from the middle point $S_3$.

Operation of the apparatus of Fig. 21 will be mentioned below briefly.

(1) First, the picture data of a handwritten original or the like are converted through the input portion 1a into electric signals to form picture data of "1" and "0" which will be stored in the first picture memory 3a. The picture data is further sent to the buffers 4a and 10a, and is stored therein.

(2) After the picture data is stored in the buffers 4a and 10a, the control portion 8a so controls the address generator 7a that it produces addresses to scan the buffer 10a in the direction x, and so controls the buffer 10a that it scans in the direction y. The first feature extracting portion 5a then detects a pair of changing points $P_1$ and $P_2$ described in (a) above, and sets the region between the pair of changing points $P_1$ and $P_2$ to be "1". The address region "1" is stored in the first address table 6a. The second feature extracting portion 11a, on the other hand, detects a pair of changing points $Q_1$ and $Q_2$ as described in (b) above, and sets the region between the pair of changing points $P_1$ and $P_2$ to be "1". The address region "1" is set to the second address table 12a.

(3) After the region between the changing points $P_1$ and $P_2$, and the region between the changing points $Q_1$ and $Q_2$ are set to "1", the exclusive OR circuit 14a performs the exclusive OR operation of the region "1" stored in the first address table 6a and of the region "1" stored in the second address table 12a. Thus, the picture data is obtained as shown in Fig. 4, and is stored in the second picture memory 13a.

(4) The thus obtained picture data of Fig. 4 is transmitted from the second picture memory 13a to the buffers 16a and 23a. The original picture data stored in the first picture memory 3a is also transmitted to the buffers 17a and 24a.

(5) The control portion 8a so controls the third address generator 15a that it generates addresses to carry out ordinary scanning, i.e., to scan the buffers 16a and 17a in the direction x from the upper side of the characters. Based upon the thus produced data, the third feature extracting portion 18a detects a pair of changing points $R_1$ and $R_2$ as mentioned in ($c_a$) above, finds the middle points $M_1$ and $M_4$ as shown in Fig. 17, draws vertical lines therefrom in the direction y until they come into contact with the characters, and horizontally draws the lines in the direction x from the points of contact. The horizontal lines are also drawn until they come into contact with the characters. The character data is obtained from the buffer 17a.

(6) At the same time, the control portion 8a so controls the fourth address generator 22a that it produces addresses to scan the buffers 23a and 24a in the direction x from the lower side of the characters as shown in Fig. 18. Based upon the thus produced data, the fourth feature extracting portion 25a finds the changing points to obtain middle points $S_1$ to $S_4$ as shown in Fig. 19. The lines are upwardly drawn in the direction y from the middle points $S_1$ to $S_4$. When the lines come into contact with the characters, the lines are then drawn toward the right and left in the direction x starting from the points of contact. The horizontal lines are also drawn until they come into contact with the characters. The character data is obtained from the buffer 24a.

(7) Data such as middle points $M_1$ to $M_4$, $S_1$ to $S_4$, and lines $l_1$, $l_2$, and $p_2$ and $p_3$ drawn therefrom in the direction y and in the direction x, as shown in Fig. 19 are sent to the third address table 19a.

(8) Based upon the data sent from the third address table 19a, the boundary line extracting circuit (f, g) 20a draws a horizontal line $l_m$ between the horizontal lines $p_2$ and $l_1$ when the line drawn in the direction y from the middle point $M_1$ intersect such lines $p_2$, $l_1$, and draws vertical lines $v_1$, $v_2$, $v_3$ when the horizontal lines overlap in the direction x, such as lines $l_2$ and $p_2$, lines $l_2$ and $p_3$, and lines $l_3$ and $p_3$, the vertical lines being drawn from the overlapped regions. Thus, the characters A to E are separated into individual character regions as shown in Fig. 20.

(9) The coordinate data divided as mentioned above is stored in the boundary line table 21a, and the picture data stored in the first picture memory 3a is extracted one character by one character depending upon the coordinate data, sent to the output memory 2a, and further sent to a character recognizing apparatus where it is recognized.

By using the present invention as mentioned above, the boundary lines are drawn among the characters to correctly separate them even when they are written close to each other. Therefore, even handwritten characters that are not described (written) in predetermined frames of the original can be separated. Thus, since even the handwritten characters can be separated into individual characters and can be extracted, the system of the invention exhibits great effect when, for example, handwritten characters are to be recognized.

**Claims**

1. An apparatus for extracting characters and figures, comprising:

an input means (1, 1a) for photoelectrically converting data on an original into picture data;

a first data-storing means (2, 3, 3a, 4a) for storing the picture data;

a first feature extracting means (3, 4, 6, 13, 4a, 5a, 7a, 8a) which scans the picture data stored in said data-storing means in a first direction to extract a first two-dimensional region between pairs of data-changing points;

a second feature extracting means (7, 8, 9, 13, 8a, 9a, 10a, 11a) which scans the picture data stored in the data-storing means in a second direction crossing the first direction to extract a second two-dimensional region between pairs of data-changing points;

a second data-storing means (5, 10, 11, 12, 6a, 12a, 13a, 14a) for storing intermediate region (1'—8') where the first region and the second regions do not overlap;

a middle point extracting means (24, 25, 26, 27, 15a, 16a, 18a) for finding a middle point of at least one scanning line in each of the intermediate regions; and

a separation line setting means (28 to 36, 19a to 24a) for obtaining separation lines for separating the picture by utilizing the middle points.

2. An apparatus for separating and extracting characters and figures according to claim 1, wherein said second data-storing means comprises a labeling means (14 to 21) for attaching labels to each of said intermediate regions (1'—8'), and a label arranging means (22, 23) for sequentially arranging the labels.

3. An apparatus for separating and extracting characters and figures according to claim 2, wherein said middle point extracting means has a memory means (27) which stores the data of locus of middle points for each of the labeled intermediate regions (1'—8').

4. An apparatus for separating and extracting characters and figures according to claim 3, wherein said separation line setting means has a boundary line associating means (28, 29) which draws a first horizontal line in the first direction between the loci of middle points of two given intermediate regions (1'—8'), and employs said first horizontal line as a separation line when there is no picture data on said first horizontal line.

5. An apparatus for separating and extracting characters and figures according to claim 4, wherein said separation line setting means has a horizontal line generating means (30, 31, 33) which generates a second horizontal line that passes through a middle point that is separated from said picture data by a predetermined distance in each of the labeled intermediate regions (1'—8'), and a boundary line extracting means (32, 34, 35) which draws vertical lines for forming boundary line when said picture data does not exist in the region where said second horizontal lines overlap as viewed from the second direction.

6. An apparatus for separating and extracting characters and figures according to claim 1, wherein said middle point extraction means has a third feature extracting means (15a, 16a, 17a, 18a, 22a to 25a) which finds a middle point in each of said intermediate regions (1'—8'), draws a first vertical line in the second direction from said middle point, and draws a horizontal line in the first direction starting from a point at which said first vertical line comes into contact with said picture data, and a drawing means (18a-0, 25a-0) which draws a second vertical line when said picture data does not exist in a region between the two given horizontal lines where they overlap as viewed from said second direction.

7. An apparatus for separating and extracting characters and figures according to claim 6, wherein said separation line setting means has a boundary line extracting means for extracting boundary lines using said first vertical lines, said horizontal lines, and said second vertical lines.

## Patentansprüche

1. Vorrichtung zum Extrahieren von Zeichen und Figuren, mit:

einer Eingangseinrichtung (1, 1a) zum photoelektrischen Konvertieren von Daten auf einem Original in Bilddaten;

einer ersten Datenspeichereinrichtung (2, 3, 3a, 4a) zum Speichern der Bilddaten;

einer ersten Extraktionseinrichtung (3, 4, 6, 13, 4a, 5a, 7a, 8a), welche die Bilddaten, die in der genannten Datenspeichereinrichtung gespeichert sind, in einer ersten Richtung abtastet, um einen ersten zweidimensionalen Bereich zwischen Paaren von Datenänderungspunkten zu extrahieren;

einer zweiten Merkmalsextraktionseinrichtung (7, 8, 9, 13, 8a, 9a, 10a, 11a), welche die Bilddaten, die in der Datenspeichereinrichtung gespeichert sind, in einer zweiten Richtung abtastet, welche die erste Richtung kreuzt, um einen zweidimensionalen Bereich zwischen Paaren von Datenänderungspunkten zu extrahieren;

einer zweiten Datenspeichereinrichtung (5, 10, 11, 12, 6a, 12a, 13a, 14a) zum Speichern von Zwischenbereichen (1'—8'), wo der erste Bereich und die zweiten Bereiche nicht überlappen;

eine Mittelpunktsextraktionseinrichtung (24, 25, 26, 27, 15a, 16a, 18a) zum Auffinden eines mittleren Punktes von wenigstens einer Abtastlinie in jedem der Zwischenbereiche; und

einer Trennliniensetzeinrichtung (28 bis 36, 19a bis 24a), zum Ermitteln von Trennlinien zum Trennen des Bildes unter Verwendung der Mittelpunkte.

2. Vorrichtung zum Trennen und Extrahieren von Zeichen und Figuren nach Anspruch 1, bei der die genannte zweite Datenspeichereinrichtung eine Kennzeicheneinrichtung (14 bis 21) zum Anbringen von Kennzeichen an jeden der genannten Zwischenbereiche (1'—8') und eine Kennzeichenarrangiereinrichtung zum sequentiellen Arrangieren der Kennzeichen enthält.

3. Vorrichtung zum Trennen und Extrahieren von Daten und Figuren nach Anspruch 2, bei der die genannte Mittelpunktsextraktionseinrichtung eine Speichereinrichtung (27) umfaßt, welche die Daten des Ortes der mittleren Punkte für jeden gekennzeichneten Zwischenbereich (1'—8') speichert.

4. Vorrichtung zum Trennen und Extrahieren von Zeichen und Figuren nach Anspruch 3, bei der die genannte Trennliniensetzeinrichtung eine Grenzlinienzuordnungseinrichtung (28, 29) hat, welche eine erste horizontale Linie in der ersten Richtung zwischen den Orten der mittleren Punkte von zwei gegebenen Zwischenbereichen (1'—8') zeichnet und die genannte erste horizontale Linie als Trennlinie verwendet, wenn es keine Bilddaten auf der genannten ersten horizontalen Linie gibt.

5. Vorrichtung zum Trennen und Extrahieren von Zeichen und Figuren nach Anspruch 4, bei der die genannte Trennliniensetzeinrichtung eine Horizontallinien-Generatoreinrichtung (30, 31, 33) hat, welche eine zweite horizontale Linie generiert, die durch den Mittelpunkt hindurchtritt, der von den genannten Bilddaten durch einen vorbestimmten Abstand in jedem der gekennzeichneten Zwischenbereiche (1'—8') getrennt ist, und eine Grenzlinienextraktionseinrichtung (32, 34, 35), welche vertikale Linien zeichnet, um Grenzlinien zu bilden, wenn die genannten Bilddaten in dem Bereich, wo die genannten zweiten horizontalen Linien überlappen, von der zweiten Richtung aus gesehen, nicht existieren.

6. Vorrichtung zum Trennen und Extrahieren von Zeichen und Figuren nach Anspruch 1, bei der die genannte Mittelpunktsextraktionseinrichtung eine dritte Merkmalsextraktionseinrichtung (15a, 16a, 17a, 18a, 22a bis 25a) hat, welche einen mittleren Punkt in jedem der Zwischenbereiche (1'—8') findet, eine erste vertikale Linie von dem genannten Mittelpunkt in der zweiten Richtung zeichnet, und eine horizontale Linie in der ersten Richtung, welche bei einem Punkt beginnt, bei dem die genannte erste vertikale Linie mit den genannten Bilddaten in Berührung kommt, und eine Zeicheneinrichtung (18a-0, 25a-0), welche eine zweite vertikale Linie zeichnet, wenn die genannten Bilddaten in dem Bereich zwischen den beiden vorgegebenen horizontalen Linien, wo sie einander überlappen, von der zweiten Richtung aus gesehen, nicht existieren.

7. Vorrichtung zum Trennen und Extrahieren von Zeichen und Figuren nach Anspruch 6, bei der die genannte Trennliniensetzeinrichtung eine Grenzlinien-Extraktionseinrichtung hat, zum Extrahieren von Grenzlinien unter Verwendung der genannten ersten vertikalen Linien und der genannten horizontalen Linien und der genannten zweiten vertikalen Linien.

## Revendications

1. Appareil d'extraction de caractères et de chiffres comportant:

un dispositif d'entrée (1, 1a) pour convertir, par voie photoélectrique des données sur un original en des données d'image;

un premier dispositif de mémorisation de données (2, 3, 3a, 4a) destiné à mémoriser les données d'image;

un premier dispositif d'extraction de caractéristique (3, 4, 6, 13, 4a, 5a, 7a, 8a) qui explore les données d'image mémorisées dans ledit dispositif de mémorisation de données dans une première direction afin d'extraire une première région bidimensionnelle entre des paires de points de changement de données;

un second dispositif d'extraction de caractéristiques (7, 8, 9, 13, 8a, 9a, 10a, 11a) qui explore les données d'image mémorisées dans le dispositif de mémorisation de données dans une seconde direction croisant la première direction pour extraire une seconde région bidimensionnelle entre les pairs de points de changement de données;

un second dispositif de mémorisation de données (5, 10, 11, 12, 6a, 12a, 13a, 14a) destiné à mémoriser des régions intermédiaires (1'—8') dans lesquelles la première région et la seconde région ne se chevauchent pas;

un dispositif d'extraction de point milieu (24, 25, 26, 27, 15a, 16a, 18a) destiné à rechercher un point milieu d'au moins une ligne d'exploration dans chacune des régions intermédiaires; et

un dispositif de mise en place de ligne de séparation (28 à 36, 19a à 24a) destiné à obtenir des lignes de séparation pour séparer l'image en utilisant les points milieu.

2. Appareil de séparation et d'extraction de caractères et de chiffres, selon la revendication 1, dans lequel ledit second dispositif de mémorisation de données comporte un dispositif d'étiquettage (14 à 21) destiné à associer des étiquettes avec chacune desdites régions intermédiaires (1'—8' et un dispositif d'arrangement d'étiquettes (22, 23) pour arranger séquentiellement les étiquettes.

3. Appareil de séparation et d'extraction de caractères et de chiffres selon la revendication 2, dans lequel ledit dispositif d'extraction de point milieu comporte un dispositif de mémoire (27) qui mémorise les données du lieu des points milieu pour chacune des régions intermédiaires étiquettées (1'—8').

4. Appareil de séparation et d'extraction de caractères et de chiffres selon la revendication 3, dans lequel ledit dispositif de mise en place de ligne de séparation comporte un dispositif d'association de ligne limite (28, 29) qui trace une première ligne horizontale dans la première direction entre les lieu des points milieu de deux régions intermédiaires données (1'—8') et qui utilise ladite première ligne horizontale comme une ligne de séparation lorsqu'il n'y a pas de données d'image sur ladite première ligne horizontale.

5. Appareil de séparation et d'extraction de caractères et de chiffres selon la revendication 4, dans lequel ledit dispositif de mise en place de ligne de séparation comporte un dispositif générateur de ligne horizontale (30, 31, 33) qui produit une seconde ligne horizontale qui passe par un point milieu qui est séparé desdites données d'image d'une distance prédéterminée dans chacune des régions intermédiaires étiquettées (1'—8') et un dispositif d'extraction de ligne limite (32, 34, 35) qui trace des lignes verticales pour former une ligne limite quand lesdites données d'image n'existent pas dans la région dans laquelle lesdites secondes lignes horizontales se chevauchent, vues de la seconde direction.

6. Appareil de séparation et d'extraction de caractères et de chiffres selon la revendication 1, dans lequel ledit dispositif d'extraction de point milieu comporte un troisième dispositif d'extraction de caracteristique (15a, 16a, 17a, 18a, 22a à 25a) qui recherche un point milieu dans chacune desdites régions intermédiaires (1'—8') qui trace une première ligne verticale dans la seconde direction à partir dudit point milieu et qui trace une ligne horizontale dans la première direction en commençant par un point auquel ladite première ligne verticale vient en contact avec lesdites données d'image et un dispositif de traçage (18a-0), (25a-0) qui trace une seconde ligne verticale quand lesdites données d'image n'existent pas dans une région entre les deux lignes horizontales données, où elle se chevauchent, vues de ladite seconde direction.

7. Appareil de séparation et d'extraction de caractères et de chiffres selon la revendication 6, dans lequel ledit dispositif de mise en place de ligne de séparation comporte un dispositif d'extraction de ligne limite pour extraire des lignes limites en utilisant lesdites premières lignes verticales, lesdites lignes horizontales et lesdites secondes lignes verticales.

Fig. 1A

Fig. 1B

Fig. 1C

Fig. 2 A

Fig. 2B

Fig. 2 C

1

Fig. 3

Fig. 4

Fig. 5

# Fig. 6 A

| e | d | c |
|---|---|---|
| f | @ | b |

M₂

# Fig. 6 B

# Fig. 7A

# Fig. 7 B

| e | d | c |
|---|---|---|
| f | @ | b |
| g | h | i |

M₃

# Fig. 7C

*Fig. 8A*

*Fig. 8B*

$R_1(x_1, y_1)$      $R_2(x_2, y_2)$

$M(x_m, y_m)$

| $x_{m1}$ | $y_{m1}$ |
|---|---|
| $x_{m2}$ | $y_{m2}$ |
| $x_{m3}$ | $y_{m3}$ |
| ⋮ | ⋮ |
| $x_{mn}$ | $y_{mn}$ |

*Fig. 9*

## Fig. 10 A

LABEL i
LABEL j

## Fig. 10 B

LABEL i
LABEL j

$(x_{mk}, y_{mk})$ ——— $(x'_{mk}, y'_{mk})$

## Fig. 10 C

LABEL i

| | $x_{m1}$ | $y_{m2}$ |
|---|---|---|
| | $x_{m1}$ | $y_{m2}$ |
| | | |
| | | |
| $j$ | $x_{mk}$ | $y_{mk}$ |
| | | |

LABEL j

| | $x_{m1}'$ | $y_{m1}'$ |
|---|---|---|
| | $x_{m2}'$ | $y_{m2}'$ |
| | | |
| $i'$ | $x_{mk}'$ | $y_{mk}'$ |
| | | |
| | | |

## Fig. 11 A

## Fig. 11 B

| | | |
|---|---|---|
| | $x_{m1}$ | $y_{m1}$ |
| | $x_{m2}$ | $y_{m2}$ |
| ⇒ | $x_{m3}$ | $y_{m3}$ |
| | | |
| | $x_{mn1}$ | $y_{mn1}$ |
| | $x_{mn}$ | $y_{mn}$ |

← BLACK DOT

## Fig. 11 C

| | | |
|---|---|---|
| | $x_{m1}'$ | $y_{m1}'$ |
| | $x_{m2}'$ | $y_{m2}'$ |
| | $x_{m3}'$ | $y_{m3}'$ |
| | | |
| ⇒ | $x_{m\ell}'$ | $y_{m\ell}'$ |
| | $x_{m\ell+1}$ | $y_{m\ell+1}$ |

← BLACK DOT

## Fig. 12 A

| LABEL | COORDINATES OF MIDDLE POINT S | | START | END |
|---|---|---|---|---|
| i | $x_{m3}$ | $y_{m3}$ | $x_{S1}$ | $x_{E1}$ |
| j | $x_{m\ell}'$ | $y_{m\ell}'$ | $x_{S2}$ | $x_{E2}$ |
| | | | | |

## Fig. 12 B

LABEL i   $x_S$ ——— XE

LABEL j   $x_S'$   E'

OVERLAP

Fig. 13

Fig. 14

*Fig. 15A*

Fig. 15

| Fig. 15 A |
|---|
| Fig. 15 B |

Fig.15B

Fig. 16

$(x_1, y_1)$     $M(x_m, y_m)$

$R_1$       $R_2 (x_2, y_2)$

Fig. 17

$M_2$

$M_1$

$M_3$    $M_4$

Fig. 18

$m_2$

Fig. 19

Fig. 20

Fig. 21

| Fig. 21A |
|----------|
| Fig. 21B |

Fig. 21A

INPUT PORTION ~1a

PICTURE MEMORY ~3a

OUTPUT MEMORY ~2a

BUFFER ~4a

FEATURE EXTRACTING PORTION I(x) ~5a

ADDRESS TABLE I ~6a

ADDRESS GENERATOR I ~7a

CONTROL PORTION ~8a

ⓐ
ⓑ

ADDRESS GENERATOR II ~9a

BUFFER ~10a

FEATURE EXTRACTING PORTION II(y) ~11a

ADDRESS TABLE II ~12a

⊕ ~14a

PICTURE MEMORY II ~13a

Fig. 21B